# EUROPEAN PATENT SPECIFICATION

(11) **EP 2 629 067 B1**
(45) Date of publication and mention of the grant of the patent: **27.07.2016**
(21) Application number: 12794624.2
(22) Date of filing: 29.02.2012
(51) Int. Cl.: G01F 15/07

(54) **BIDIRECTIONAL COUNTER**
BIDIREKTIONALER ZÄHLER
COMPTEUR BIDIRECTIONNEL

(30) Priority: 05.01.2012 CN 201220001768 U
(43) Date of publication of application: 21.08.2013
(73) Proprietor: Tancy Instrument Group Co., Ltd., Zhejiang 325800 (CN)
(72) Inventor: PAN,Youy i, Zhejiang 325800 (CN); YANG, Guofen, Zhejiang 325800 (CN); PAN, Chengze, Zhejiang 325800 (CN); TAO, Chaojian, Zhejiang 325800 (CN)
(74) Representative: Viering, Jentschura & Partner mbB Patent- und Rechtsanwälte
(86) International application number: PCT/CN2012/071782
(87) International publication number: WO 2013/102319

(56) References cited:
- WO-A1-2010/106952
- CN-U- 201 697 675
- CN-Y- 2 252 330
- CN-Y- 2 921 793
- GB-A- 492 082
- GB-A- 532 857
- GB-A- 757 594
- US-A- 3 346 182
- US-A1- 2011 271 795

## Description

### Technical Field

The present utility model relates to an indicating device for flow meter, particularly to a bidirectional counter which can realize count-up during mechanical rotation in both normal and reverse directions.

### Background Art

At present, the counters configured for flow meters count in a single direction. In other words, when a flow meter works in a specified flow direction, such counter will count up and when the direction is reverse to the specified flow direction, the counter will count down; or on the contrary, when the flow meter works in the specified flow direction, the counter will count down, and when the direction is reverse to the specified flow direction, the counter will count up. In this case, when the user wants the flow meter to work in a direction reverse to the configured flow direction according to specific need, the counter will be unable to meet the requirements unless the flow meter is changed. This causes great inconvenience and time and economic loss to the user and the flow meter manufacturer. Chinese patent CN200620104606.0 discloses a bidirectional counter for gas meter. Chinese patent CN200520012164.2 also discloses a bidirectional counter for gas meter. The two patients both adopt two sets of gear transmission including a forward gear train and a backward gear train to ensure the input shaft of the counter rotates in a same direction, thereby realizing count-up of the counter. They solve the problem of counting up in a direction and counting down in the reverse direction, but they have a complex structure and high cost, so they are not suitable for popularization and application.

Furthermore, patent GB532857 discloses a bidirectional counter comprising two gear trains associated to two dial integrators to separately register the flow in one direction and the opposite direction.

### Summary of the Utility Model

In order to overcome the complex structure and high cost of existing bidirectional counters, the present utility model provides a bidirectional counter, which realizes count-up in both directions and has a simple structure and low cost.

The technical scheme of the present utility model: a bidirectional counter comprises a gun gear, a drive shaft, a character wheel and a main shaft. The drive shaft drives the character wheel to rotate via a transmission mechanism. One end of the main shaft is connected to the medium-driven gun gear and rotates under the drive of the gun gear. The other end of the main shaft is connected to a main bevel gear. A left bevel gear and an opposite right bevel gear are disposed on the drive shaft. One-way bearings in a same direction are disposed between the left bevel gear and the drive shaft and between the right bevel gear and the drive shaft. The main bevel gear is engaged with the left bevel gear and the right bevel gear in the same time.

The one-way bearings are one-way needle bearings.

Between the drive shaft and the character wheel, gear transmission is adopted.

The transmission ratio between the main bevel gear and the left bevel gear is equal to the transmission ratio between the main bevel gear and the right bevel gear.

A stop collar is disposed on the drive shaft and outside the left bevel gear and the right bevel gear.

The present utility model has the following beneficial effect: As the foregoing scheme is adopted, the flow of the medium drives the gun gear to rotate, thereby making the main bevel gear rotate. As the left bevel gear and the right bevel gear are coaxially disposed on the drive shaft and their rotation directions are reverse, one of them drives, via the one-way bearing, the drive shaft to rotate in a normal direction, while the other idles and no torque in the negative direction is generated upon the drive shaft; when the medium flows in a reverse direction, the gun gear rotates reversely and so does the main bevel gear. In this case, still one of the left bevel gear and the right bevel gear drives, via the one-way bearing, the drive shaft to rotate in a normal direction, while the other idles. Therefore, no matter whether the medium flows in a normal direction or in a reverse direction, as the one-way bearings rotate only in one direction, the main bevel gear always drives the drive shaft to rotate in a same direction, thereby realizing count-up or count-down in both directions. Compared with the background art, the present utility model has a simple structure and low cost.

### Brief Description of the Drawings

FIG. 1 is a schematic of the structure of the present utility model.
FIG. 2 is a left view of FIG. 1.

In the figure, 1 - gun gear, 2 - drive shaft, 3 - character wheel, 4 - main shaft, 5 - main bevel gear, 6 - left bevel gear, 7 - right bevel gear, 8 - one-way bearing, 9 - stop collar.

### Detailed Description of the Embodiments

Below the present utility model is further described by referring to the accompanying drawings:

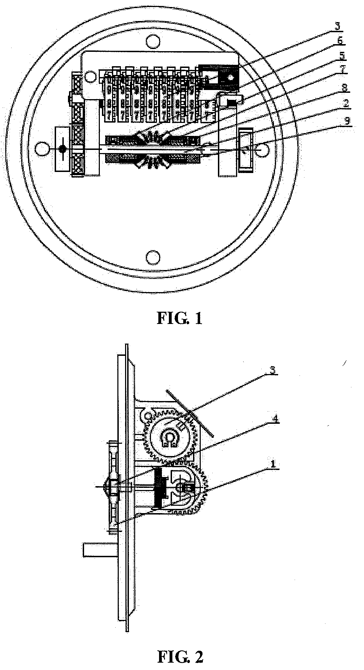

As shown in FIG. 1 and FIG. 2, a bidirectional counter comprises a gun gear 1, a drive shaft 2, a character wheel 3 and a main shaft 4, the drive shaft 2 drives the character wheel 3 to rotate via a transmission mechanism, one end of the main shaft 4 is connected to the medium-driven gun gear 1 and rotates under the drive of the gun gear 1, the other end of the main shaft 4 is connected to a main bevel gear 5, a left bevel gear 6 and an opposite right bevel gear 7 are disposed on the drive shaft 2, one-way bearings 8 in a same direction are disposed between the left bevel gear 6 and the drive shaft 2 and between the right bevel gear 7 and the drive shaft 2, and the main bevel gear 5 is engaged with the left bevel gear 6 and the right bevel gear 7 in the same time. As the foregoing scheme is adopted, the flow of the medium drives the gun gear 1 to rotate, thereby making the main bevel gear 5 rotate. As the left bevel gear 6 and the right bevel gear 7 are coaxially disposed on the drive shaft 2 and their rotation directions are reverse, one of them drives, via the one-way bearing 8, the drive shaft 2 to rotate in a normal direction, while the other idles and no torque in the negative direction is generated upon the drive shaft 2; when the medium flows in a reverse direction, the gun gear 1 rotates reversely and so does the main bevel gear 5. In this case, still one of the left bevel gear 6 and the right bevel gear 7 drives, via the one-way bearing 8, the drive shaft 2 to rotate in a normal direction, while the other idles. Therefore, no matter whether the medium flows in a normal direction or in a reverse direction, as the one-way bearings 8 rotate only in one direction, the main bevel gear 5 always drives the drive shaft 2 to rotate in a same direction, thereby realizing count-up or count-down in both directions. Compared with the background art, the present utility model has a simple structure and low cost.

As shown in FIG. 1, the one-way bearings 8 are one-way needle bearings. The one-way needle bearings have a compact structure and occupy a small space.

As shown in FIG. 1, between the drive shaft 2 and the character wheel 3, gear transmission is adopted. The transmission and counting are accurate.

As shown in FIG. 1, the transmission ratio between the main bevel gear 5 and the left bevel gear 6 is equal to the transmission ratio between the main bevel gear 5 and the right bevel gear 7. The measurement is same regardless of the flow direction of the medium.

As shown in FIG. 1, a stop collar 9 is disposed on the drive shaft 2 and outside the left bevel gear 6 and the right bevel gear 7. The stop collar 9 limits the positions of the left bevel gear 6 and the right bevel gear 7 so that the left bevel gear 6 and the right bevel gear 7 can mesh correctly with the main bevel gear 5 to avoid dislocation of the left bevel gear 6 and the right bevel gear 7.

## Claims

1. A bidirectional counter, which comprises a gun gear (1), a drive shaft (2), a character wheel (3) and a main shaft (4), the drive shaft (2) is arranged to drive the character wheel (3) to rotate via a transmission mechanism, and one end of the main shaft (4) is connected to the gun gear (1) driven by flowing medium and is arranged to rotate under the drive of the gun gear (1), wherein the other end of the main shaft (4) is connected to a main bevel gear (5), a left bevel gear (6) and a right bevel gear (7) opposite to the left bevel gear (6) are coaxially disposed on the drive shaft (2), one-way bearings (8) in a same direction are disposed between the left bevel gear (6) and the drive shaft (2) and between the right bevel gear (7) and the drive shaft (2), the main bevel gear (5) is engaged with the left bevel gear (6) and the right bevel gear (7) in the same time, where, during operation, the flowing medium, in normal direction or reverse, drives the gun gear (1), and thus the main bevel gear (5), to rotate, the left bevel gear (6) and right bevel gear (7) rotate in reverse directions, **characterized in that** only one of them, via the one-way bearing (8), drives the drive shaft (2) to rotate in a same normal direction, realizing count-up or count-down in both directions of the flowing medium.

2. The bidirectional counter according to claim 1, wherein the one-way bearings (8) are one-way needle bearings.

3. The bidirectional counter according to claim 1 or 2, wherein between the drive shaft (2) and the character wheel (3), gear transmission is adopted.

4. The bidirectional counter according to claim 1 or 2, wherein the transmission ratio between the main bevel gear (5) and the left bevel gear (6) is equal to the transmission ratio between the main bevel gear (5) and the right bevel gear (7).

5. The bidirectional counter according to claim 1 or 2, wherein a stop collar (9) is disposed on the drive shaft (2) and outside the left bevel gear (6) and the right bevel gear (7).

## Patentansprüche

1. Ein Zweirichtungszähler, der ein Zahnrad (1), eine Antriebswelle (2), ein Typenrad (3) und eine Hauptwelle (4) aufweist, wobei die Antriebswelle (2) eingerichtet ist, um das Typenrad (3) zum Rotieren über einen Getriebemechanismus anzutreiben, und ein Ende der Hauptwelle (4) mit dem Zahnrad (1), das durch ein Strömungsmedium angetrieben wird, verbunden ist, und eingerichtet ist, um unter dem Antrieb des Zahnrades (1) zu rotieren, wobei
das andere Ende der Hauptwelle (4) mit einem Hauptkegelrad (5) verbunden ist, wobei ein linkes Kegelrad (6) und ein rechtes Kegelrad (7) gegenüber dem linken Kegelrad (6) koaxial an der Antriebswelle (2) angeordnet sind, Einweglager (8) in einer gleichen Richtung sind zwischen dem linken Kegelrad (6) und der Antriebswelle (2) und dem rechten Kegelrad (7) und der Antriebswelle (2) angeordnet, wobei das Hauptkegelrad (5) mit dem linken Kegelrad (6) und dem rechten Kegelrad (7) in der gleichen Zeit in Eingriff ist, wobei während des Betriebs das Strömungsmedium, in normaler oder umgekehrter Richtung, das Zahnrad (1), und somit das Hauptkegelrad (5) antreibt, um zu rotieren, wobei das linke Kegelrad (6) und das rechte Kegelrad (7) in entgegengesetzten Richtungen rotieren, **dadurch gekennzeichnet, dass** nur eines von ihnen, über das Einweglager (8), die Antriebswelle (2) antreibt, um in einer gleichen Normalrichtung zu rotieren, wodurch ein Hochzählen oder Herunterzählen in beiden Richtungen des Strömungsmediums realisiert wird.

2. Der Zweirichtungszähler gemäß Anspruch 1, wobei die Einweglager (8) Einweg-Nadellager sind.

3. Der Zweirichtungszähler gemäß Anspruch 1 oder 2, wobei zwischen der Antriebswelle (2) und dem Typenrad (3) eine Getriebeübertragung angewandt wird.

4. Der Zweirichtungszähler gemäß Anspruch 1 oder 2, wobei das Übersetzungsverhältnis zwischen dem Hauptkegelrad (5) und dem linken Kegelrad (6) gleich dem Übersetzungsverhältnis zwischen dem Hauptkegelrad (5) und dem rechten Kegelrad (7) ist.

5. Der Zweirichtungszähler gemäß Anspruch 1 oder 2, wobei ein Anschlagbund (9) an der Antriebswelle (2) und außerhalb des linken Kegelrades (6) und des rechten Kegelrades (7) angeordnet ist.

## Revendications

1. Compteur bidirectionnel, qui comprend un engrenage à palettes (1), un arbre d'entraînement (2), une roue à caractères (3) et un arbre principal (4), l'arbre d'entraînement (2) est agencé de façon à entraîner en rotation la roue à caractères (3) par l'intermédiaire d'un mécanisme de transmission, et une extrémité de l'arbre principal (4) est connectée à l'engrenage à palettes (1) entraîné par un fluide qui circule, et est agencée de façon à tourner sous l'entraînement de l'engrenage à palettes (1), dans lequel :
l'autre extrémité de l'arbre principal (4) est connectée à un engrenage conique principal (5), un engrenage conique gauche (6) et un engrenage conique droit (7) opposé à l'engrenage conique gauche (6) sont disposés de manière coaxiale sur l'arbre d'entraînement (2), des roulements unidirectionnels (8) dans une même direction sont disposés entre l'engrenage conique gauche (6) et l'arbre d'entraînement (2), et entre l'engrenage conique droit (7) et l'arbre d'entraînement (2), l'engrenage conique principal (5) est mis en prise avec l'engrenage conique gauche (6) et l'engrenage conique droit (7) en même temps, où, en fonctionnement, le fluide qui circule, dans une direction normale ou inverse, entraîne en rotation l'engrenage à palettes (1), et ainsi l'engrenage conique principal (5), l'engrenage conique gauche (6) et l'engrenage conique droit (7) tournent dans des directions opposées, **caractérisé en ce que** :
seul l'un d'entre eux, par l'intermédiaire du roulement unidirectionnel (8), entraîne en rotation l'arbre d'entraînement (2) dans une même direction normale, en réalisant un comptage ou un décomptage dans les deux directions du fluide qui circule.

2. Compteur bidirectionnel selon la revendication 1, dans lequel les roulements unidirectionnels (8) sont des roulements à aiguilles unidirectionnels.

3. Compteur bidirectionnel selon la revendication 1 ou la revendication 2, dans lequel un entraînement par engrenages est adopté entre l'arbre d'entraînement (2) et la roue à caractères (3).

4. Compteur bidirectionnel selon la revendication 1 ou la revendication 2, dans lequel le rapport de transmission entre l'engrenage conique principal (5) et l'engrenage conique gauche (6), est égal au rapport de transmission entre l'engrenage conique principal (5) et l'engrenage conique droit (7).

5. Compteur bidirectionnel selon la revendication 1 ou la revendication 2, dans lequel un collier d'arrêt (9) est disposé sur l'arbre d'entraînement (2) et à l'extérieur de l'engrenage conique gauche (6) et de l'engrenage conique droit (7).
